# EUROPEAN PATENT APPLICATION

(11) **EP 3 343 346 A1**
(43) Date of publication of application: **04.07.2018**
(21) Application number: 17208705.8
(22) Date of filing: 19.12.2017
(51) Int. Cl.: G06F 3/12

(54) **PRINTER ERROR CHECKING WITH NFC TECHNOLOGY**

(30) Priority: 27.12.2016 US 201615390979
(71) Applicant: Datamax-O'Neil Corporation, Orlando, FL 32808 (US)
(72) Inventor: CAO, Ying, Morris Plains, NJ 07950 (US)
(74) Representative: Houghton, Mark Phillip

(57) **Abstract**

A system and method for communicating printer errors from a small printer to a nearby NFC-enabled device are provided. A printer has an NFC tag which is configured to store information on a recent print error. A nearby NFC-enabled device (such as a cell phone with a suitable app) can read the print error from the printer, and so identify the print error for a user or technician. Once the print error has been fixed or corrected, the error is cleared from the NFC tag, enabling the tag to store the next printer error that may occur. In an alternative embodiment, the tag may store multiple print errors, with an oldest error being deleted as the tag's memory becomes full, to make room for new error data. In an embodiment, the NFC tag may store other printer status data as well, and the NFC-enabled device may be configured to report the additional data.

## Description

### FIELD OF THE INVENTION

The present invention relates to a method and apparatus for system error checking in a printer or other electromechanical digital device; and more particularly, to a method and apparatus for making printer error information self-modifying after error notification has been provided and the error has been corrected.

### BACKGROUND

Electromechanical digital devices, such as printers, copiers, fax machines and paper scanners, are particularly prone to problems and errors due to the mechanical nature of their operations. Paper jams, ink blockages, motor problems, or internal optics misalignments, for example, which may be strictly internal, can commonly occur. Purely digital errors (such as communications errors with an external computer) may occur as well; and purely digital devices (without mechanical elements) are prone to errors as well.

Conventionally, many digital devices are configured with display screens or other display elements, such as LEDs (light emitting diodes), which may convey a variety of status information. For example, an office printer may have a small flat-screen display employing technologies well known in the art, or may have an LED-based display. Such displays may be used to convey internal status information which may include error information. When a printer fails to print, the display can be used to convey the nature of the problem to either the user or a service technician.

Some printers and other similar devices (for example, optical scanners), however, may not be configured with display technologies. Such display-less configurations may be particularly common with devices which are portable, or low-cost, or both. For example, hand-held printers or small portable printers may be used to print labels, bar-codes, receipts, and similar small documents; such small printers may be configured without screen display technologies. Such small, inexpensive, and/or portable printers may also have only a limited number of LEDs or similar light-emitting elements, or none at all, which limits or circumscribes how much information can be conveyed to a user.

As a result, if a printer or other device which lacks a display does malfunction, a user or service technician may not be able to readily ascertain the nature of the problem.

What is needed, then, is a system and method for a printer (or other digital device) with limited or no display capabilities to effectively support the identification of internal errors via an external notification system, and to then modify the error identification once the error has been fixed.

### SUMMARY

Accordingly, in one aspect, the present system and method solves the problem by a method which entails displaying printer error information on a local third-party display device, while retaining and storing the error information in the printer for future reference. Once the error is corrected, the stored error information in the printer may be deleted or updated to reflect that the problem has been resolved.

In another aspect, the present system and method solves the problem via software which runs on a hardware processor of a printer, and which communicates printer error information to a local third-party display device for error display, while retaining and storing the error information in the printer for future reference. Once the error is corrected, the software may delete or update the stored error information in the printer to reflect that the problem has been resolved.

In another aspect, the present system and method solves the problem via a processor-based system of a printer or other digital device, where the processor-based system is configured to communicate printer error information to a local third-party display device for error display. Once the error is corrected, the processor-based system may delete or update the stored error information to reflect that the problem has been resolved.

### BRIEF DESCRIPTION OF THE DRAWINGS

FIG. 1 is a cross-sectional schematic view of some internal operating elements of an exemplary printer.
FIG. 2 is a cross-sectional schematic view of some internal operating elements of an exemplary printer with a near field communications (NFC) tag.
FIG. 3 illustrates an exemplary near field communications system with an exemplary printer with an NFC tag, which is enabled for communications with an exemplary NFC-enabled device, such as a smart phone.
FIG. 4 is a flowchart of an exemplary method for printer error checking with NFC technology.

### DETAILED DESCRIPTION

In the following description, certain specific details are set forth in order to provide a thorough understanding of various embodiments. However, one skilled in the art will understand that the invention may be practiced without these details. In other instances, well-known structures associated with computers, with printers, with electromechanical digital devices, with other digital devices, with data display, and/or with data storage or data transmission, have not been shown or described in detail to avoid unnecessarily obscuring descriptions of the embodiments.

Unless the context requires otherwise, throughout the specification and claims which follow, the word "comprise" and variations thereof, such as, "comprises" and "comprising" are to be construed in an open sense, that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the claimed invention.

### Exemplary Conventional Printer

The present system and method is applicable to multiple different kinds of printers, including but not limited to laser printers, LED printers, inkjet printers, thermal printers, dot matrix printers, and other kinds of printers as well. The present system and method is also applicable to related electromechanical digital devices, such as scanners, fax machines, and copiers.

For convenience, an exemplary laser printer is illustrated and discussed in some exemplary embodiments below; but persons skilled in the relevant arts will appreciate that other embodiments of the present system and method may employ other kinds of printers, including for example and without limitation LED printers, inkjet printers, thermal printers, and dot matrix printers.

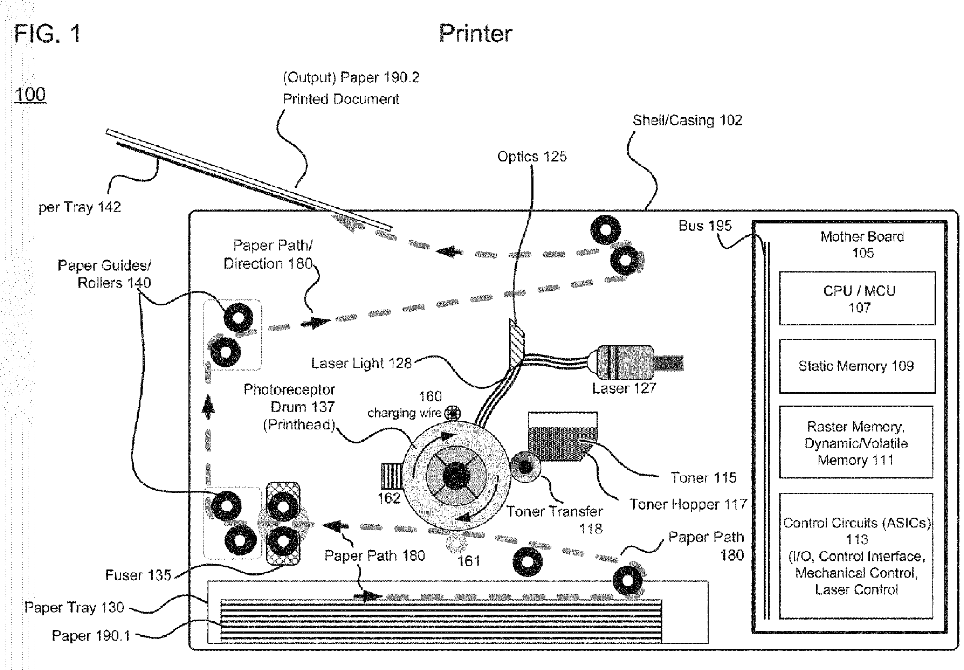

FIG. 1 illustrates some elements of an exemplary conventional printer 100, in this case a laser printer 100, in a cross-sectional, schematic view.

**Overview:** Laser printer 100 employs a laser source 127 (for example, a semiconductor laser) to project laser light 128 onto an electrically charged, rotating cylindrical photoreceptor drum 137 (also referred to as "printhead 137"). The laser light 128 is suitably modulated (via printer electronics, discussed below) in accordance with a digitally stored, rasterized image graphics and/or rasterized text (not illustrated in the figures) on a source document page (also not illustrated in the figures).

Photoconductivity on drum 137 allows the charged electrons to fall away from the areas exposed to light. Powdered ink (toner) particles 115 are then electrostatically attracted to the charged areas of the drum 137 that have not been laser-beamed.

Print media 190.1, such as paper 190.1 or other print media (such as acetate or labels, etc.), is passed through printer 100 by mechanical feed elements 140 such as rollers 140. The paper 190.1 is transferred along paper path/direction 180. Along path/direction 180, the paper 190.1 makes contact with drum 137. Drum 137 then transfers the image onto print media 190.1 by direct contact. Finally, the paper or other printer media 190.1 is passed onto a fuser 135, which uses intense heat to instantly fuse the toner/image onto the paper. The result is output paper 190.2 which is imprinted with the durable, persistent image of the original digital, raster-scanned page view.

**Print process:** Presented here are some selected, further details of the print process:
**(1) Raster image processing:** The document to be printed is digitally encoded in a page description language such as PostScript, Printer Command Language (PCL), or Open XML Paper Specification (OpenXPS). This is typically performed by an external computer (not illustrated) which is connected to printer 100. In some cases, however, the source document is encoded on printer 100 itself, for example if printer 100 functions in a dual role as a document scanner. (Scanning elements are not illustrated in the figure.)
   A raster image processor converts the page description into a bitmap which is stored in the printer's raster memory 111. Each horizontal strip of dots across the raster page is known as a raster line or scan line. In an embodiment, raster image processing may be performed by the hardware microprocessor of an external computer (for example, the same computer which generates the page description language). In an alternative embodiment, the conversation from a page description language to a raster image is performed on printer 100 itself, for example by central processing unit 107 employing instructions stored in static memory 109.
   A laser printer typically employs at least enough raster memory 111, which is typically volatile memory 111 such as DRAM, to hold the bitmap image of an entire raster page or multiple pages.
**(2) Applying a negative charge to the photosensitive drum:** A corona wire 160 or a primary charge roller 160 positioned parallel to the drum 137, projects an electrostatic charge onto the revolving photosensitive drum 137, which is capable of holding an electrostatic charge on its surface while it is in the dark.
**(3) Exposing drum to laser light:** Laser light 128 selectively neutralizes the negative charge on the photoreceptive drum 137, to form an electrostatic image. Lasers 127 can form highly focused, precise, and intense beams of light. The laser 127 aims laser light 128 at printer optics 125. Printer optics 125 may include a rotating polygonal mirror and a system of lenses and mirrors (not illustrated in detail) which directs the laser light 128 onto the photoreceptor drum 137, writing image/page pixels onto the drum 137. Drum 137 rotates during the laser sweep. The stream of rasterized data held in the printer's raster memory 111 rapidly modulates the laser 127, and so modulates the laser light 128, as it sweeps.
   The laser beam 128 neutralizes (or reverses) the charge on the surface of the drum 137. That is, the areas on the drum 137 which are struck by the laser light 128, momentarily have no charge. The result on the drum's surface is a latent, static electric negative image of the rasterized source page.
**(4) Developing the image on the drum:** Toner 115 consists of fine particles of dry plastic powder mixed with carbon black or coloring agents. The toner particles 115 are given a negative charge inside the toner cartridge 117 or toner hopper 117. As toner particles 115 emerge onto the developer drum 137 they are electrostatically attracted to the latent image on the drum 137 (the neutral areas on the surface of drum 137, which had been rendered neutral by being struck by the laser light 128). Because negative charges repel each other, the negatively charged toner particles will not adhere to drum 137 where the negative charge (imparted previously by the charge roller 160) remains.
   Toner 115 is pressed against drum 137 by the toner-coated transfer roll 118, and so the toner 115 is transferred from the surface of toner transfer roller 118 to the uncharged portions of the surface of drum 137.
**(5) Transferring image to paper:** A sheet of paper 190.1 is rolled under the photoreceptor drum 137, which has been coated with a pattern of toner particles in the exact places where the laser struck it moments before. The toner particles 115 transfer from the surface of drum 137 to the paper 190.1. Some printers may employ positively charged transfer roller 161 on the back side of the paper to help pull the negatively charged toner from the photoreceptor drum 137 to the paper 190.1.
**(6) Fusing (toner melted onto paper with heat and pressure):** Paper 190.1 passes through rollers in the fuser assembly 135, where high temperatures and pressure are used to permanently bond the toner 115 to paper 190.1. One roller is usually a heat roller and the other is a pressure roller. The result is that source paper 190.1 has been transformed, via this print process, to output paper 190.2 with the desired text, image(s), and/or graphic(s).
**(7) Cleaning and recharging:** As drum 137 completes a revolution, it is exposed to an electrically neutral soft blade 162 which cleans any remaining toner from the photoreceptor drum and deposits it into a waste reservoir (not illustrated in the figures). Charge wire 160 then reestablishes a uniform negative charge on the surface of the now clean drum 137, readying it to be struck again by the laser light 128.

### Other Exemplary Printer Elements

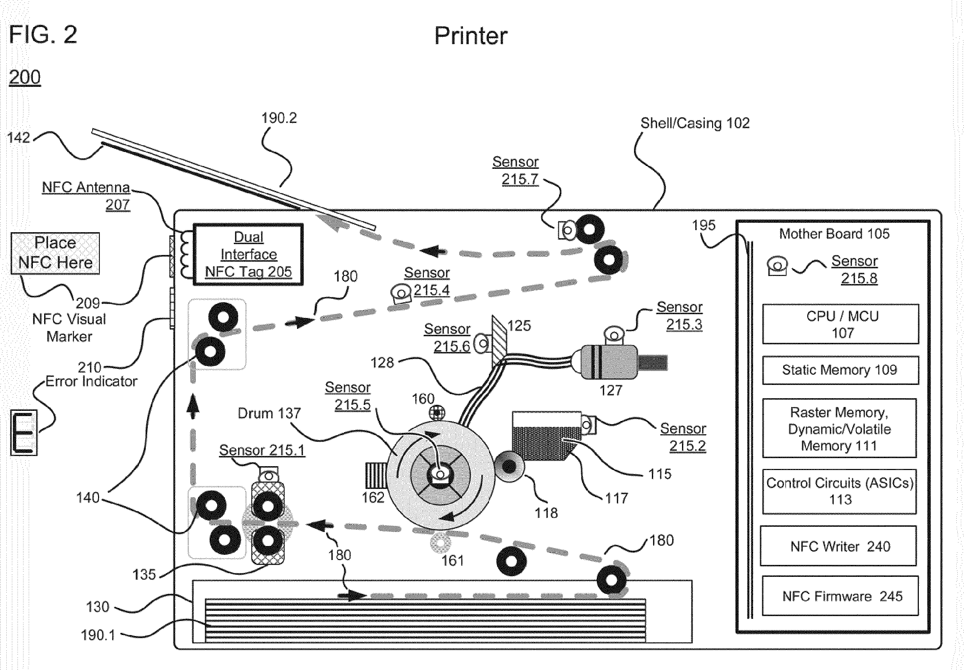

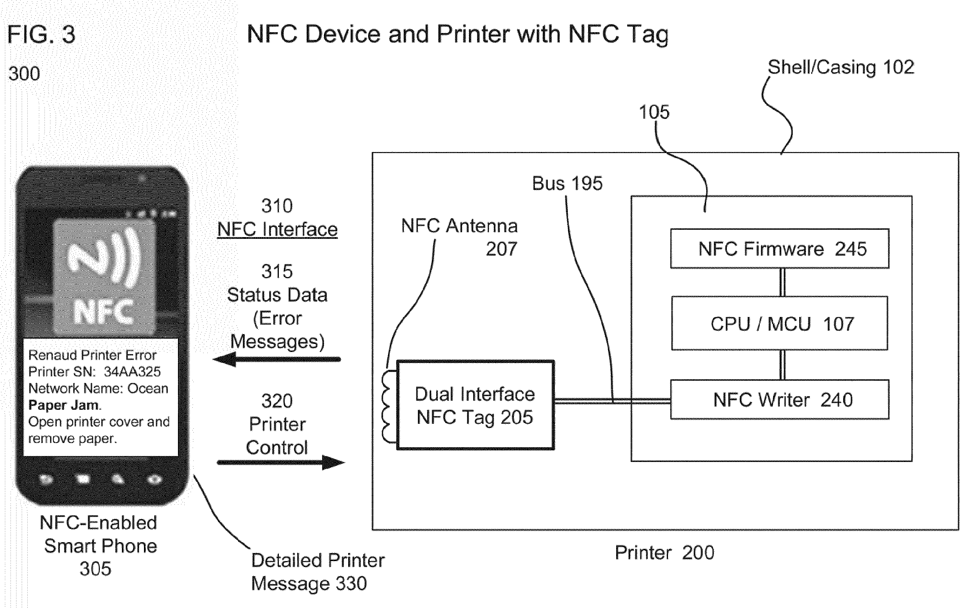

Laser printer 100 may have an exterior shell or casing 102, which may be composed of metal, plastics, or various polymers and composites. In embodiments of the present system and method where an NFC tag 205 may be positioned interior to printer 200 (see FIGs. 2 and 3), the shell 102 may be made of a non-metallic material to facilitate radio frequency (RF) communications between the tag 205 and an external NFC-enabled device 305 (see FIG. 3).

Exemplary printer 100 may employ other elements as well. One or more **motors** and other **electromechanical mechanisms,** not illustrated in the figure, are typically employed for purposes such as rotating the polygonal mirror which may be part of optics 125; driving the rollers 140 which propel paper 190 through the printer; rotating drum 137 and other rotary elements; and generally effectuating transfer of paper 190 and materials within printer 100.

A variety of internal **sensors** 215 (not shown in FIG. 1) may also be present in printer 100. See FIG. 2 below for further discussion. (The sensors are presented in FIG. 2 for purposes of clarity, reducing possible "visual clutter" in FIG. 1.)

A **motherboard** 105 typically holds and interconnects various microchips used to control and monitor printer 100. Motherboard 105 may include, for example and without limitation:

A **central processing unit (CPU)** 107 or **microcontroller unit (MCU)** 107 which provides for overall operational control of printer 100. This includes monitoring printer operations via sensors 215 (see FIG. 2), and directing printer operations via various application specific integrated circuits (ASICs) 113 discussed further below. CPU 107 may for example be a general purpose hardware microprocessor such as one from any of the Intel Atom, Celeron, Pentium or Core series of hardware processors.

**Static memory** 109 may store non-volatile operational code (such as internal device drivers) for printer 100. CPU 107 may employ the code stored in static memory 109 in order to maintain the operational control of printer 100.

**Volatile memory** 111, such as dynamic RAM (DRAM), may be used to store data received from external computers, such as page descriptions, raster images, and other data pertinent to the printing of particular documents. Volatile memory 111 may also store device drivers used to maintain operational control of printer 100.

Control of printer 100 may be maintained in various ways. In some embodiments, CPU 107 of printer 100 may directly control various elements of the printer (such as motors and other mechanical servers, etc.). In other instances, control may be effectuated by CPU 107 via **various application specific integrated circuits (ASICs)** 113 which act as intermediary **control circuits** 113.

Control circuits 113 may support such functions as external input/output (for example, via USB ports, an Ethernet port, or wireless communications, not illustrated in the figure); a control interface for a user control panel or wireless remote on the outside of the printer (not illustrated in the figure); mechanical control of motors and other electromechanical elements; and control of laser 127.

In some embodiments of printer 100, some or all control circuits 113 may not be on motherboard 105, and may instead by integrated directly in laser 127, fuser 135, toner hopper/cartridge 117, and into various other electromechanical elements of printer 100.

A **system bus 195** may serve to transfer data and messages between elements of motherboard 105, and between motherboard 105 and various other microchips, controllers, and sensors 215 of printer 100.

A **power supply** (not illustrated in the figures) typically supplies power for printer 100, typically via a transformer which regulates electrical power from a wall socket. The power supply may be in the form of batteries (for a portable printer).

**Other printer embodiments:** Different printers 100 implement these steps described above in distinct ways, and some elements may be referred to by other terms or generic terms. For example, the elements directly responsible for printing onto the paper 190 may be referred to generically as the **printhead** 137. In exemplary printer 100, either the photoreceptor drum 137 alone, or possibly photoreceptor drum 162 in combination with any or all of fuser 135, charging wire 160, and/or blade 162 may be thought of as the printhead 137.

For another example, **LED printers** use a linear array of light-emitting diodes to "write" the light on the drum; the array of light-emitting diodes is the printhead 137 along with drum 137. Similarly, a **thermal printer** uses a heat-emitting element as the printhead 137.

In various embodiments of a laser printer 100, 200, the toner 115 is based on either wax or plastic, so that when the paper passes through the fuser assembly 135, the particles of toner melt. The fuser 135 can be an infrared oven, a heated pressure roller, or (on some very fast, expensive printers) a xenon flash lamp.

### Printer With Near Field Communications for Error Reporting

FIG. 2 illustrates some elements of an exemplary printer 200 according to the present system and method, in this case a laser printer 200, in a cross-sectional, schematic view.

Printer 200 is substantially the same as, or similar to, printer 100 discussed above in conjunctions with FIG. 2. Most elements of printer 200 have therefore been discussed above, and the discussion will not be repeated here.

**Internal Sensors:** Printer 200 (along with printer 100, as noted above), may have a variety of internal sensors 215. Note that specific sensor placements in FIG. 2, relative to the printer elements (125, 127, 135, 137, etc.) which are monitored by the sensors 215, do not necessarily reflect actual or typical placement of such sensors 215 in relation to the monitored elements. The sensors shown are exemplary only, and more, fewer, and/or different sensors may be employed in different embodiments. Exemplary sensors include:
(i) Sensor 215.1 may monitor the temperature and/or pressure of fuser 135.
(ii) Sensor 215.2 may monitor the amount of toner 115 left in toner hopper 117.
(iii) Sensor 215.3 may monitor operational aspects of laser 217, including whether laser 217 is operative at all, and the laser's temperature.
(iv) One or more paper sensors 215.4 may monitor paper movement through laser printer 100, 200, detecting (among other things) any paper jams.
(v) One or more drum sensors (215.5) may monitor drum 137, including drum rotation and rotation speed, the amount of electric charge at various specific points along drum 137, the total or average electric charge on drum 137 at points in time, element of toner density on drum 137, the charge or electrical condition of charging wire 160 and/or blade 162, and other aspect of drum 137.
(vi) Optical sensor 215.6, which may monitor mirror rotation and rotation speed, and other aspects of optics 125.
(vii) One or more roller sensors 215.7 may monitor paper guides/rollers 140.
(viii) Mother board sensor 215.8 may monitor numerous aspects of motherboard 105 and system electrical performance, including motherboard temperature, motherboard fan speed, motherboard memory usage, operational status of specific motherboard chips, activity and performance of bus 195, and other system performance metrics.

In general, sensors 215 may monitor paper movement, the amount of electric charge on various elements, the rotary speed of various rotating elements, the power status of printer 100, 200, and other aspects of operations of printer 100. Some elements of printer 100 may have built-in sensors 215. Sensors 215 are useful for monitoring the operational status of printer 100, and for identifying and reporting operational problems or errors.

**Near Field Communications (NFC) Tag:** Printer 200 may also include a near field communications (NFC) tag 205, along with a suitable NFC antenna 207. In an embodiment, NFC tag 205 may be a dual-interface NFC tag 205.

In an embodiment, NFC tag 205 may be linked to CPU/MCU 107, either directly or via intermediary chips 113, via connections (not illustrated) which may include bus 195. In an embodiment, NFC tag 205 may be communicatively linked to raster memory 111, either directly or via intermediary chips 113, via connections (not illustrated) which may include bus 195. Other communicative connections between NFC tag 205 and other elements of printer 200 may be present as well.

In an embodiment of the present system and method, NFC tag 205 may be used to store error information regarding errors in printer 200, for example errors detected in part or in whole via sensors 215.

In an embodiment of the present system and method, tag 205 may have data written to it, erased from it, and or written/erased, either directly or indirectly, by CPU 107 of printer 200. In an alternative embodiment, data writing to and/or erasure from NFC tag 205 may be done by specialized ASICs of printer 200, such as NFC writer 240 and/or NFC firmware 245. In all such embodiments, printer error information and other status information may be written to NFC tag 205 by printer 200.

In an embodiment of the present system and method, printer 200 may also be able to read data from NFC tag 205, either directly or indirectly by CPU 107, including data written to the tag by an external device such as smart phone 305.

**NFC Tag Power:** In an embodiment, in order to be written to or read from, NFC tag 205 may require power from a power supply (not illustrated in the figures) of printer 200. In one such embodiment, error data stored on NFC tag 205 is only available when printer 200 is powered "ON". In an alternative embodiment, even when printer 200 is powered "OFF", NFC tag 205 may still be powered by a low-level voltage or current which continues to be supplied from the power supply. In such an embodiment, it may be possible for an NFC-enabled device 305 (see FIG. 3, below) to read error data from NFC tag 205 even when the printer is substantially powered "OFF" or in a "SLEEP" mode.

In an alternative embodiment, NFC tag 205 may receive operating power, at least at some times, via power received via radio frequency (RF) coupling from the external NFC-enabled device 305 (again see FIG. 3, below). In such an embodiment, it may be possible for the NFC-enabled device 305 to read error data from NFC tag 205 even when the printer is fully powered "OFF".

**NFC Tag Structural Placement:** In an embodiment of the present system and method, NFC tag 205 may be positioned in the interior of printer 200 (as shown in FIG. 2), but sufficiently close to the printer's exterior casing 102 to be in substantial proximity to any NFC-enabled device 305 (see FIG. 3) when such a device 305 is placed in close proximity to printer 200. The NFC tag may even be mounted directly attached to the interior side of the exterior casing 102.

In an embodiment, an **NFC visual marker** 209 may be placed on the exterior side of exterior casing 102 of printer 200, possibly with a suitable graphic and/or text (for example, "Error Pad" or "Place NFC Here") to indicate appropriate positioning for an NFC-enabled device 305 (near to tag 205). FIG. 2 illustrates both an exemplary placement of NFC visual marker 209 on printer 200, and an exemplary frontal view of an exemplary NFC visual marker 209.

In an alternative embodiment, the NFC tag 205 may be mounted directly on the exterior side of casing 102.

In an embodiment of the present system and method, and possibly depending in part on the placement of mother board 105, NFC tag 205 may be mounted directly on motherboard 105.

**NFC Writer and Firmware:** In an embodiment of the present system and method, printer 200 may include an **NFC writer chip** 240, which may be used to write error information into the NFC tag 205 and clear error information from NFC tag 205. NFC writer 240 may be controlled by either or both of CPU 107 or NFC firmware 245.

Persons skilled in the relevant arts will appreciate that if NFC tag 205 is a dual-interface NFC tag, NFC writer 240 may not be needed, and instead NFC tag 205 may be written to directly from, for example, NFC firmware 245.

**NFC firmware** 245 is used to control NFC writer 240, to write the error information of printer 200 to NFC tag 205 when an error occurs, and also to clear the error information in NFC tag 205 when the printer problem is resolved. In various different embodiments of the present system and method, NFC firmware 245 may be a stand-alone integrated circuit, or may be part of NFC writer 240, or may be stored in static memory 109.

**Error Signal:** In an embodiment a simple external error indicator 210, such as an inexpensive LED display, may be positioned on an exterior surface of printer casing 102. Indicator 210 may be communicatively linked to CPU 107, and may be used to signal when data is stored or data is updated in NFC Tag 205. In an embodiment, simple numeric or alphanumeric codes may be displayed to indicate a type of data stored in NFC tag 205. For example, the display of a letter "E" may indicate that an error code or error data is stored in NFC Tag 205. FIG. 2 illustrates both an exemplary placement of error indicator 210 on printer 200, and an exemplary frontal view of an exemplary error indicator 210.

In an alternative or complementary embodiment, an audio signaling element (such as a small speaker) may be used to generate an audio tone or other audio signal, indicating that an error may have occurred.

### Overview of Near Field Communications (NFC)

FIG. 3 illustrates an exemplary near field communications system 300 consisting of an exemplary printer 200 with an NFC tag 205, which is enabled for communications with an exemplary NFC-enabled device 305, such as an NFC-enabled smart phone 305.

Near-field communication (NFC) is a set of communication protocols that enable two electronic devices, one of which is usually a portable device such as a smart phone 305, to establish radio frequency (RF) communication by bringing them within a short distance of each other. In some embodiments, the distance requirement is that an NFC-enabled device 305 needs to be within about 5 cm (2 in) of an NFC tag 205 and/or the NFC antenna 207 for communications to occur. In alternative embodiments, greater or lesser distances may be required.

NFC protocols establish a generally-supported communications standard for NFC devices. NFC-enabled devices 305 are equipped with suitable electronics (not illustrated in the figures) to communicate over radio frequencies (RF) with other NFC-enabled devices, and/or with NFC tags 205, over short distances via the NFC protocols. Along with the suitable electronics, NFC-enabled portable devices (such as cell phone 305) typically employ NFC apps to read electronic NFC tags 205 and to display data 330 from the NFC tags 205. NFC employs electromagnetic induction between two loop antennae (such as antenna 207 and an internal loop antenna [not illustrated in FIG. 3] of smart phone 305) when NFC devices -- for example smart phone 305 and a printer 200 with an NFC tag 205exchange information.

Each full NFC device (such as smart-phone 305) can read information stored on NFC tags 205. (NFC peer-to-peer mode enables two NFC-enabled devices 305 to communicate with each other to exchange information in an ad hoc fashion.)

**NFC tags** 205 are passive data stores which can be read, and under some circumstances written to, by an NFC device 305. They typically contain data (as of 2015 between 96 and 8,192 bytes), and may be read-only or may be rewritable. In an embodiment, the present system and method may employ rewriteable tags 205 for purposes of storing and updating error information or other status data.

NFC tags 205 may also be custom-encoded at the factory by printer manufacturers or can be encoded by printer 200, using NFC Forum specifications. Data to be encoded may include, for example and without limitation:
(i) Printer identification information, such as a printer serial number, product ID number, or Bluetooth device information (for example, the MAC address).
(ii) System data, including error and status information for printer 200.
(iii) Printer error information may include, for example and without limitation: A name or identifying code for the internal error; specific parameters pertinent to each specific or particular type of error; the date and time for the error; the number of times the error has occurred within a specified time span; and the name or other ID of the document being printed (if any) at the time the error occurred, and whether the document print process was completed successfully or not (if ascertainable).
(iv) Status information may include for example and without limitation: the estimated amount of toner still available, the estimated time before the toner needs to be replaced or refilled, the paper level (or number of labels remaining, number of sheets remaining, etc.), the number of print jobs currently in a print queue, and an estimated time to complete a current document print process.

Once in sufficient proximity with the NFC tag 205 of printer 200, an NFC-enabled smart phone can establish a wireless connection, or NFC interface 310, with the printer. Via NFC interface 310, a suitably configured smart phone application can read status data 315, such as error data 315, that has been stored in the dual interface NFC tag 205. Smart phone 305 can then display the error information in an error message 330 via a suitable error-monitoring/reporting app on cell phone 305.

In an embodiment of the present system and method, smart phone 305 may also write printer-control commands to be stored in NFC tag 305. CPU 107 of printer 200 may be configured, via software or firmware, to regularly monitor or poll a suitable memory space in NFC tag 205. In this way, smart phone 305 may be used to control some activities or processes of printer 200.

### Exemplary Method for Error Reporting and Updating

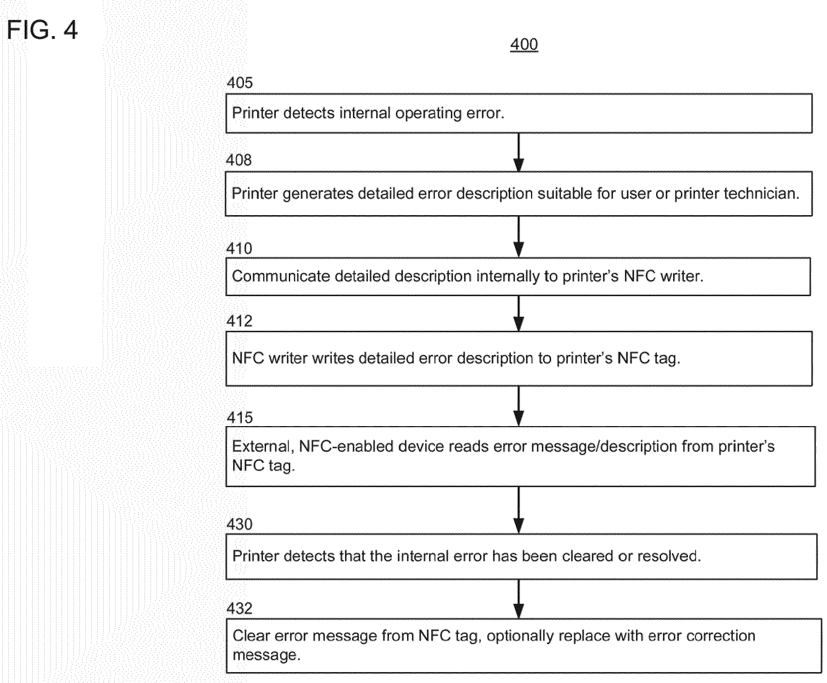

FIG. 4 is a flowchart for an exemplary method 400 of error reporting and updating on an exemplary NFC tag equipped printer 200.

Method 400 begins with step 405. In step 405, an internal operating error is detected by printer 200. Error detection generally entails both detection of an operating condition by one or more internal sensors 215, and a determination by CPU 107 that the operating condition is of a nature that makes it an error condition. CPU 107 may make the determination based on the data provided by sensor(s) 215, and also possibly based on logical criteria or trigger conditions stored for example in static memory 109 or other firmware.

In an embodiment of the present system and method, step 405 may entail, in the alternative or in addition, an identification of a potential error condition or an anticipated future error condition. For example, a condition of low toner may not cause an immediate printer error, but may still be signaled to a printer user to indicate the toner cartridge 117 should be promptly replaced.

In step 408 of method 400, CPU 107 generates a detailed description of the error, suitable to inform a printer user or printer technician of the nature of the error, possibly including corrective steps and instructions.

In step 410 of method 400, CPU 107 -- possibly in conjunction with NFC firmware 245 -- communicates the detailed error description to NFC writer 240. In an embodiment of the present system and method, CPU 107, possibly in conjunction with system firmware and/or control circuits 113, sets Error Indicator 210 to provide a visual indication that a printer error has occurred or is pending, and that new error information is available via NFC tag 205.

In step 412 of method 400, NFC writer 240 writes the detailed error description to NFC tag 205.

In step 415 of method 400, an NFC-enabled external device 305, such as a smart phone 305, is used to read the NFC tag 205. This enables a user or service technician to obtain detailed information about the printer error, via the error message 330 on the smart phone 305.

At some point, a user or service technician will fix the printer error. (This activity is not illustrated in flow chart 400.)

In step 430, printer 200 detects that the internal operating error has been corrected or cleared. This generally entails both detection of an altered (corrected) operating condition by one or more internal sensors 215, and a determination by CPU 107 that the operating problem is now resolved. CPU 107 may make the determination based on the data provided by sensor(s) 215, and also possibly based on logical criteria or trigger conditions stored for example in static memory 109 or other firmware.

In an embodiment of the present system and method, step 430 may entail, in the alternative or in addition, an identification that a potential error condition or an anticipated future error condition has been resolved.
For example, if the level of toner had been low, printer 200 may determine that the toner cartridge 117 has been replaced or that addition toner 115 had been added to the toner hopper 117.

In step 432 of method 400, CPU 107 and NFC writer 240 - - possibly in conjunction with NFC firmware 245 -- clears the error message (that is, deletes the error message) from NFC tag 205.

In an alternative embodiment, in step 432, CPU 107 first prepares a detailed message affirmatively indicating the error has been cleared or resolved, including for example indicating the nature of the error which was resolved. CPU 107, along with NFC writer 245, then deletes the existing error message but replaces it with the detailed error resolution message.

In an embodiment of the present system and method, in step 432 CPU 107, possibly in conjunction with system firmware and/or control circuits 113, also sets Error Indicator 210 to provide a visual indication that a printer error has been resolved.

In step 435 of method 400, an NFC-enabled external device 305, such as a smart phone 305, may be used to read error resolution from NFC tag 205.

### Additional Embodiments

In an embodiment of the present system and method, when printer 200 is not in an error condition, general printer status data or operating data may be stored in NFC tag 205. This data may be read and displayed by cell phone 305. Such routine data may include, for example and without limitation, a list of current and recent print jobs, the (estimated) amount of paper left in printer 200, the toner level of printer 200, the current time remaining for a current print job, and number and/or identifiers for print jobs in the current print queue.

In an embodiment of the present system and method, when an error occurs, the general status information stored in NFC tag 205 is replaced (in whole or in part) by suitable error data and instructions. In an embodiment of the present system and method, when the error condition is resolved, printer 200 not only deletes the error information, but also restores (or updates) the previously deleted printer status information.

In an embodiment of the present system and method, NFC-Enabled Smart Phone 305 can write operating instructions or control instructions to NFC tag 205. Printer 200 may routinely poll NFC tag 205 (for example, every few seconds) to search for any new or updated operating instructions. Printer 200 may then execute the operating instructions.

In an embodiment of the present system and method, when the error condition is resolved, printer 200 not only deletes the error information, but also writes to the NFC tag 205 an identification of a document whose printing was interrupted by the internal error.

In an embodiment of the present system and method, when the error condition is resolved, printer 200 not only deletes the error information, but also writes to the NFC tag an identification of a print queue of one or more documents which were queued to be printed prior to the print error.

In an embodiment of the present system and method, the error condition may be either an actual error or a pending error condition, such as toner running low or paper running low. Upon resolving the error condition or pending error condition, the printer may identify a related maintenance task or an estimated date or time interval for a related maintained operation. For example, if a toner cartridge is replaced, then based on a history of prior cartridge replacements, the printer may estimate a next due date for toner cartridge replacement. In an embodiment of the present system and method, when the error or pending error is resolved, printer 200 not only deletes the error information, but also writes to NFC 205 tag a reminder of the estimated next due date of cartridge replacement.

It will be apparent to persons skilled in the relevant arts that, while the system and method has been disclosed herein within reference to exemplary printers, the system and method as disclosed is readily applicable to other digital electro-mechanical devices (DEMDs) in addition to printers. For example, a photocopy machine equipped with an NFC tag and supporting NFC technology could report photocopy errors via the NFC tag, and make other suitable additions and deletions to the memory of the photocopier NFC tag, in a manner substantially the same or similar to that disclosed herein for an exemplary printer.

For another example, a fax machine equipped with an NFC tag and supporting NFC technology could report fax machine error via the NFC tag, and make other suitable additions and deletions to the memory of the fax NFC tag, in a manner substantially the same or similar to that disclosed herein for an exemplary printer.

For another example, a paper scanner or a symbol scanner equipped with an NFC tag and supporting NFC technology could report scanning machine error via the NFC tag, and make other suitable additions and deletions to the memory of the scanner NFC tag, in a manner substantially the same or similar to that disclosed herein for an exemplary printer.

Applications to other DEMDs may be envisioned as well.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

The foregoing detailed description has set forth various embodiments of the devices and/or processes via the use of block diagrams, flow charts, schematics, exemplary data structures, and examples. Insofar as such block diagrams, flow charts, schematics, exemplary data structures, and examples contain one or more functions and/or operations, it will be understood by those skilled in the art that each function and/or operation within such block diagrams, flowcharts, schematics, exemplary data structures, or examples can be implemented, individually and/or collectively, by a wide range of hardware, software, firmware, or virtually any combination thereof.

In one embodiment, the present subject matter may be implemented via Application Specific Integrated Circuits (ASICs). However, those skilled in the art will recognize that the embodiments disclosed herein, in whole or in part, can be equivalently implemented in standard integrated circuits, as one or more computer programs running on one or more computers (e.g., as one or more programs running on one or more computer systems), as one or more programs running on one or more controllers (e.g., microcontrollers), as one or more programs running on one or more processors (e.g., microprocessors), as firmware, or as virtually any combination thereof, and that designing the circuitry and/or writing the code for the software and or firmware would be well within the skill of one of ordinary skill in the art in light of this disclosure.

In addition, those skilled in the art will appreciate that the control mechanisms taught herein are capable of being distributed as a program product in a variety of tangible forms, and that an illustrative embodiment applies equally regardless of the particular type of tangible instruction bearing media used to actually carry out the distribution. Examples of tangible instruction bearing media include, but are not limited to, the following: recordable type media such as floppy disks, hard disk drives, CD ROMs, digital tape, flash drives, and computer memory.

The various embodiments described above can be combined to provide further embodiments. These and other changes can be made to the present systems and methods in light of the above-detailed description. In general, in the following claims, the terms used should not be construed to limit the invention to the specific embodiments disclosed in the specification and the claims, but should be construed to include all voice-recognition systems that read in accordance with the claims. Accordingly, the invention is not limited by the disclosure, but instead its scope is to be determined entirely by the following claims.

## Claims

1. A method for reporting an error in a printer, comprising:
detecting, via a sensor of the printer, a first operating state of the printer;
determining, via a hardware processor of the printer, that the first operating state is indicative of a printer error;
writing to a near field communications (NFC) tag of the printer a message indicative of the printer error, wherein:
the NFC tag comprises a memory suitable for storing the message, and an NFC-enabled external device can read from the memory of the NFC tag the printer message indicative of the printer error;
detecting, via the sensor of the printer, a second operating state of the printer;
determining, via the hardware processor of the printer, that the second operating state is indicative that printer error has been resolved; and
clearing from the NFC tag the message indicative of the printer error.

2. The method of claim 1, further comprising:
upon clearing from the NFC tag the message indicative of the printer error, writing to the NFC tag a current operating status of the printer.

3. The method of claim 1, further comprising:
upon clearing from the NFC tag the message indicative of the printer error, writing to the NFC tag an identification of a document whose printing was interrupted by the printer error.

4. The method of claim 1, further comprising:
upon clearing from the NFC tag the message indicative of the printer error, writing to the NFC tag an identification of a print queue, said print queue comprising one or more documents which were queued to be printed prior to said printer error.

5. The method of claim 1, further comprising:
determining, via the hardware processor, that the printer error is a pending printer error;
writing to the NFC tag a message indicative of the pending printer error;
determining, via the hardware processor, that the second operating state is indicative that pending printer error has been resolved; and
clearing from the NFC tag the message indicative of the pending printer error.

6. The method of claim 1, further comprising:
determining, via the hardware processor, a recommended printer maintenance operation based on the resolved printer error; and
writing to the NFC tag a message indicative of the recommended printer maintenance operation.
